Europäisches Patentamt

European Patent Office

Office européen des brevets

(11) Publication number: **0 385 684**
**A1**

(12) **EUROPEAN PATENT APPLICATION**

(21) Application number: **90301998.2**

(22) Date of filing: **26.02.90**

(51) Int. Cl.5 **B32B 15/08, B32B 15/18**

(30) Priority: **28.02.89 JP 48233/89**
**15.07.89 JP 182964/89**

(43) Date of publication of application:
**05.09.90 Bulletin 90/36**

(84) Designated Contracting States:
**DE FR GB IT**

(71) Applicant: **KABUSHIKI KAISHA KOBE SEIKO**
**SHO also known as Kobe Steel Ltd.**
**3-18 1-chome, Wakinohama-cho Chuo-ku**
**Kobe 651(JP)**

(72) Inventor: **Sato, Motoo**
**1178-664, Rokubuichi, Inami-cho**
**Kako-gun, Hyogo-ken(JP)**
Inventor: **Yutori, Yoshiyuki**
**119-43, Noguchi, Noguchi-cho**
**Kakogawa-shi, Hyogo-ken(JP)**
Inventor: **Tanaka, Yoshiki**
**1031-11, Shimizu, Uozumi-cho**
**Akashi-shi, Hyogo-ken(JP)**
Inventor: **Nishikawa, Hiroshi**
**4-341-72, Minamibefu, Nishi-ku**
**Kobe-shi, Hyogo-ken(JP)**
Inventor: **Ishida, Ryuichi**
**4-1-11, Kishichidori, Nada-ku**
**Kobe-shi, Hyogo-ken(JP)**
Inventor: **Korida, Kazuhiko**
**4-1-37, Tomogaoka, Suma-ku**
**Kobe-shi, Hyogo-ken(JP)**

(74) Representative: **Horton, Sophie Emma et al**
**Elkington and Fife Beacon House 113**
**Kingsway**
**London WC2B 6PP(GB)**

(54) **Resistance weldable type vibration damping composite steel sheet.**

(57) A resistance weldable type vibration damping composite steel sheet including two thin steel sheets, a visco-elastic high-molecular resin film sandwiched between the thin steel sheets, and metal particles uniformly dispersed in the visco-elastic high-molecular resin film. The resistance weldable type vibration damping composite steel sheet is formed by laminating the visco-elastic high-molecular resin film containing the metal particles between the thin steel sheets. The ratio of the average size (d) of the metal particles before laminating to the thickness (t) of the resin film after laminating is in the range of $1.2 \leq d/t \leq 2.5$, and the flattening ratio of the metal particles after laminating (i.e., the ratio of the size of the metal particles in the direction of the thickness of the resin film after laminating to that before laminating) is 6 % or more, and the ratio of an anchoring amount ( $\delta$ ) of the metal particles anchoring into the thin steel sheet to the thickness (t) of the resin film is in the range of $1 \% \leq \delta /t$. Furthermore, a ratio of a hardness (Ph) of the metal particles to a surface hardness (Sh) of the thin steel sheets is in the range of $0.6 \leq Ph/Sh \leq 1.1$.

# F I G. 1

## RESISTANCE WELDABLE TYPE VIBRATION DAMPING COMPOSITE STEEL SHEET

### BACKGROUND OF THE INVENTION

The present invention relates to a vibration damping composite steel sheet having an excellent vibration damping capability, and more particularly to a resistance weldable type vibration damping composite steel sheet superior in bonding strength which has an influence upon press formability and having an especially superior performance of resistance welding such as spot welding, seam welding and projection welding.

Recently, requirement of noise suppression or silence has increased in various fields. Particularly in the field where external vibration or noise needs to be effectively suppressed, for example, in the field of commodities such as automobiles, or home electric appliances, etc. using a prime mover, or in the field of materials to be used for building construction, there has been positively promoted the employment of a vibration damping composite steel sheet effective to absorption of vibration or noise energy.

Such a vibration damping composite steel sheet is formed of a so-called constraint type composite material (damping material) including a skin material such as a cold-rolled steel sheet, various coated steel sheets, stainless steel sheet, aluminum sheet, titanium sheet or synthetic resin sheet, and including a visco-elastic high-molecular resin sandwiched between the two skin sheets.

However, as the high-molecular resin sandwiched between both the skin steel sheets is an electrical insulating material, there is a problem that the welding processes such as spot welding, seam welding and projection welding which are the typical techniques for joining thin sheets into a structure member cannot be directly applied to the composite damping material.

To solve this problem, has been recently proposed that a conductive material such as iron powder (Japanese Patent Laid-open Publication No. 57-51453), nickel powder (Japanese Patent Laid-open Publication No. 63-188040) or carbon powder (Japanese Patent Laid-open Publication No. 57-163560) is added to the visco-elastic high-molecular resin which is an electrical insulating material, to thereby give a conductivity thereto.

According to the above conventional technique, while conductivity is temporarily given to the visco-elastic high-molecular resin, a large amount of the conductive material must be added in order to prevent the generation of welding defects during the welding procedure. By increasing the amount of the conductive material to be added, the weldability can be more stabilized, thus reducing the rate of welding defect generation. However, this entails the disadvantage that it is accompanied by a reduction in bonding strength against tensile shearing (see "Material and Process" Vol. 1, No. 5, Seminar Number 345; and "Iron and Steel" Vol. 63, No. 13, p. 363).

The reduction in bonding strength causes separation of the composite sheets (two sheets) upon press working which is a typical working as a forming process for thin sheets, with the result that the composite sheets cannot be formed, which is a fatal disadvantage.

Further, in the case of using various coated steel sheets for the skin material, it is difficult to readily stabilize the weldability and prevent the generation of welding defects previously and completely even though the conductive material is added. Thus, the expanded adaptation of the material using the various coated steel sheets having a superior corrosion resistance for the skin material of the vibration damping composite steel sheet is greatly inhibited.

### SUMMARY OF THE INVENTION

It is an object of the present invention to provide a resistance weldable type vibration damping composite steel sheet which may both ensure stable weldability without reducing the damping performance and provide the bonding strength necessary for press forming.

It is another object of the present invention to provide a resistance weldable type vibration damping composite steel sheet which may stabilize the resistance welding even when a coated steel sheet is used for the skin material.

To achieve the above objects, the present inventors have first investigated in detail the cause of the generation of the welding defects during resistance welding and the cause of reduction in the bonding strength. As the result of investigation, the following causes have been found.

That is, the reduction in bonding strength and the generation of welding defects are caused by incompleteness of the bonding upon laminating the skin steel sheets and a resultant nonuniform condition of the conductive material contained in the visco-elastic high-molecular resin sandwiched between the skin steel sheets after laminating such that some of the conductive material is so present as to entangle the resin, while the remainder is so present as not to entangle the resin. Particularly in the case of a coated steel sheet having a high hardness at a surface layer of the skin steel sheets, the proportion of the condition where the conductive material is so present as to entangle the resin is very high.

If the conductive material is present under such an nonuniform condition, current is allowed to flow through a conductive circuit formed at a portion where the resin is absent, at an initial stage of current supply upon resistance welding, and the resin becomes molten and softened by resistance heat (Joule heat) due to the current supply. Then, the resin is eliminated by an electrode force to cause dielectric breakdown between the skin steel sheet and the conductive material and generate a spark. Further, in the case that the proportion of the condition where the conductive material is so present as to entangle the resin between the skin steel sheets is high, the current is concentrated at a local portion where a conductive circuit is formed at the initial stage of current supply. At this time, if the amount of the Joule heat greatly exceeds the heat capacity of the skin steel sheets, the skin steel sheets will become molten and will not be able to endure an increased inner pressure of the resin as molten, softened and vaporized between the skin steel sheets. As a result, there is a possibility that holes will be formed through the skin steel sheets.

If the amount of the conductive material to be added is increased in order to prevent the above problem, it is anticipated that the number of stable conductive circuits not entangling the resin between the skin steel sheets will be increased to thereby stabilize the weldability. However, the bonding area between the surface of the steel sheet and the resin for providing an intended bonding strength is reduced. That is, the number of hydrogen bonds contributing to the bonding is reduced to cause a reduction in the bonding strength. Further, in the case of adding a conductive material having a particle size smaller than the thickness of the resin film, an effective conductive circuit cannot be formed even though the electrode force of the electrodes is applied. As a result, it has become apparent that serious welding defects such as a non-conductive condition where a welded joint cannot be obtained and the formation of holes will be generated.

Accordingly, it is desirable that a conductive material having a particle size larger than the thickness of the damping resin is added to provide a good conductive condition between both the skin steel sheets and thereby ensure the stabilization of the resistance weldability. However, if the conductive material only is deformed upon laminating, the bonding area between the skin steel sheet and the damping resin is reduced to cause a reduction in bonding strength. In addition, as the resin is present between the skin steel sheet and the conductive material, the stability of the resistance weldability is not always ensured.

On the basis of the above results from the investigation, the inventors have studied from an angle quite different from that in the aforementioned prior art a method of forming an effective conductive circuit upon resistance welding by mixing a powdered conductive material in a visco-elastic high-molecular resin. As the result of study, the inventors have found a resistance weldable type vibration damping composite steel sheet which can readily stabilize the resistance weldability of a greatly higher level without reducing the bonding strength, which is hard to attain in the prior art, and further can be manufactured at a low cost.

According to one aspect of the present invention, there is provided in a resistance weldable type vibration damping composite steel sheet including two thin steel sheets, a visco-elastic high-molecular resin film sandwiched between said thin steel sheets, and metal particles uniformly dispersed in said visco-elastic high-molecular resin film, said resistance weldable type vibration damping composite steel sheet being formed by laminating said visco-elastic high-molecular resin film containing said metal particles between said thin steel sheets; the improvement wherein a ratio of an average size (d) of said metal particles before laminating to a thickness (t) of said resin film after laminating is in the range of $1.2 \leq d/t \leq 2.5$, and a flattening ratio of said metal particles after laminating (i.e., a ratio of the size of said metal particles in a direction of the thickness of said resin film after laminating to that before laminating) is 6 % or more, and a ratio of an anchoring amount ($\delta$) of said metal particles anchoring into said thin steel sheet to the thickness (t) of said resin film is in the range of $1 \% \leq \delta/t$.

According to another aspect of the present invention, there is provided in a resistance weldable type vibration damping composite steel sheet including two thin steel sheets, a visco-elastic high-molecular resin film sandwiched between said thin steel sheets, and metal particles uniformly dispersed in said visco-elastic high-molecular resin film, said resistance weldable type vibration damping composite steel sheet being formed by laminating said visco-elastic high-molecular resin film containing said metal particles between said thin steel sheets; the improvement wherein a ratio of a hardness (Ph) of said metal particles to a surface hardness (Sh) of said thin steel sheets is in the range of $0.6 \leq Ph/Sh \leq 1.1$.

As described above, the resistance weldable type vibration damping composite steel sheet according to the present invention has a structure such that the visco-elastic high-molecular resin containing the metal particles serving as a conductive material uniformly dispersed therein is laminated between the two thin steel sheets.

4

The thin steel sheet may be formed from various kinds of steel to be employable for such a vibration damping composite steel sheet, for example, an ordinary cold-rolled steel sheet, hot-rolled steel sheet, various coated steel sheets, and stainless steel sheet. Particularly, the various coated steel sheets are preferably employed. A thickness of the thin steel sheet is not particularly limited.

Although a thickness of the visco-elastic high-molecular resin film is not particularly limited, it is preferably in the range of 10 - 150 $\mu$m, more preferably 30 - 80 $\mu$m. If the thickness of the resin film is less than 10$\mu$m, the damping performance of the damping resin, that is, the effect of converting an external vibration energy into a thermal energy and dissipating the thermal energy is suddenly reduced. As a result, the basic characteristics of the vibration damping composite steel sheet in itself cannot be exhibited. Thus, a thickness less than 10$\mu$m is not preferable. On the other hand, if the thickness of the resin film is more than 150 $\mu$m, the damping performance itself is not reduced, but the strength of the resin itself becomes short to cause an increase in slippage quantity at the ends of the steel sheets upon forming of the damping sheet. Thus, a thickness more than 150 $\mu$m is also disadvantageous.

Further, it is a matter of course that the visco-elastic high-molecular resin may be selected from various resin materials such as polyolefin resin, polyester resin, vinyl acetate resin.

While metal particles of various kinds are employed for the conductive material for providing a conductivity according to the present invention, a pure iron powder is preferable, for example. According to a feature of the present invention, a particle size of the metal particles is set to be larger than the thickness of the resin film containing the metal particles. More specifically, a ratio of the average particle size (d) before laminating to the thickness (t) of the resin film after laminating is set to be in the range of $1.2 \leq d/t \leq 2.5$. By setting the ratio d/t to be 1.2 or more, the generation of resistance welding defects is not recognized, but if the ratio d/t is more than 2.5, a bonding strength against shearing is somewhat greatly reduced. Therefore, an upper limit of the ratio d/t is preferably set to be 2.5.

According to the feature of the present invention, the relationship between a surface hardness (Sh) of the skin steel sheets and a hardness (Ph) of the metal particles is defined. More specifically, a ratio of the hardness (Ph) of the metal particles to the surface hardness (Sh) of the skin steel sheets is set to be in the range of $0.6 \leq Ph/Sh \leq 1.1$. Thus by setting the ratio Ph/Sh to be 0.6 or more, the generation of resistance welding defects is not recognized, but if the ratio Ph/Sh is less than 0.6, the generation of resistance welding defects cannot completely be prevented. Further, if the ratio Ph/Sh is more than 1.1, there is no problem in the weldability but a dispersion pattern of the metal particles appears on the surface of the damping sheet. Thus, the ratio Ph/Sh more than 1.1 is not preferable from the viewpoint of a surface quality.

The metal particles may be produced at a low cost by a water atomizing process, for example. In this process, a molten metal is quenched from a molten condition to obtain the metal particles. Under an atomized condition, a thick oxide film is formed on a surface of each metal particle, and accordingly the metal particles are hard to use as a conductive material. Further, as each metal particle has a quenched structure, it has a very high hardness and a poor ductility. In order to avoid this defect, the metal particles are subjected to heat treatment in a reducing atmosphere, so that the oxide film on the surface of each metal particle may be reduced and that the hardness (strength) of each metal particle may be reduced, and that the ductility may be improved. By controlling the heat treatment condition, a desired hardness and deformation capacity of each metal particle can be ensured.

As to the particle size of the metal particles to be added, when an iron powder is employed, for example, the particle size cannot be fixed but it is always accompanied by a particle size distribution having a given range. Therefore, it is practical to use a powder obtained by screening the particles into different mesh ranges of two ranks with use of a sieve as defined by JIS Z8801 and thereby adjusting the particle size.

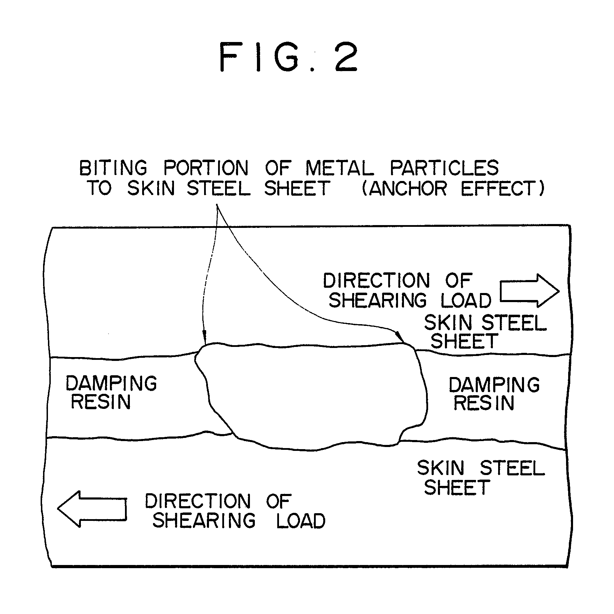

In the manufacture of the vibration damping composite steel sheet, the metal particles for providing a conductivity which are adjusted in hardness are preliminarily dispersed uniformly in the damping resin to form a resin film. In sandwiching the resin film between the two skin steel sheets (thin steel sheets), the resin is melted once by heating to form a resin bank in order to prevent entrainment of the air into the damping resin layer. Then in laminating the resin film with a predetermined thickness by means of a metal roll, a pressing force greater than a reaction force of the molten resin is applied, thereby deforming the metal particles as the conductive material till the predetermined thickness of the resin film. At the same time, since the metal particles in the resin film are laminated under the condition where they bite into the skin steel sheets, the contact condition of the metal particles with the skin steel sheets is greatly improved to thereby stabilize the resistance weldability. Furthermore, the presence of the metal particles under the biting condition to the skin steel sheets functions as an anchor effect regarding the bonding strength. Accordingly, a reduction in bonding strength as occurring when increasing an amount of the conductive material to be added can be effectively prevented (see Fig. 2).

In order to exhibit the anchor effect by deforming both the skin steel sheets and the metal particles, it is necessary to keep a predetermined relationship between the hardness of the metal particles to be added and the hardness of the surface layers of the skin steel sheets directly contacting the metal particles. Furthermore, a ratio of the size of the metal particles in the direction of the thickness of the resin film after laminating to that before laminating, that is, a deformation amount (flattening ratio) should be ensured to 6 % or more, preferably 20 % or more. Although an upper limit of the deformation amount of the metal particles is not particularly defined, it is thought that the upper limit does not exceed 90 % in consideration of the circumstance such that the resin is laminated with a normal thickness with use of the metal particles having a hardness and a particle size to be normally employed.

In order to ensure the anchor effect of the metal particles which has an influence upon the bonding strength, it is effective that a ratio of an anchoring amount ($\delta$) of the metal particles anchoring into the skin steel sheet after laminating to a thickness (t) of the resin film should be set to 1 % or more. However, if this ratio $\delta/t$ is greater than 10 %, the resin is hard to laminate. Moreover, a large anchoring amount needs to unnecessarily increase the hardness of the metal particles and also adversely affects a surface condition of the vibration damping composite steel sheet after press forming. Thus, an upper limit of the ratio ($\delta/t$) is preferably set to 10 %.

As to an amount of the metal particles to be added, it is sufficient to add the metal particles in a minimum amount necessary for the stabilization of the weldability. If the amount is less than 2 vol %, the generation of the welding defects cannot be prevented. A maximum value of this amount not adversely affecting the damping capacity and the bonding strength is 5 vol %. Consequently, the amount of the metal particles to be added is preferably in the range of 2 - 5 vol %.

Other objects and features of the invention will be more fully understood from the following detailed description and appended claims when taken with the accompanying drawings.

BRIEF DESCRIPTION OF THE DRAWINGS

Fig. 1 is a graph illustrating the relationship between the ratio of the average size of iron particles/the thickness of resin film and the spot weldability, bonding strength and loss factor of the vibration damping composite steel sheet;

Fig. 2 is a schematic illustration of a microscopically observed cross section of the vibration damping composite steel sheet, which also illustrates an anchor effect of the metal particle influencing the bonding strength against shearing; and

Fig. 3 is a graph illustrating the relationship between the amount of iron particles to be added and the spot weldability, bonding strength and loss factor of the vibration damping composite steel sheet.

DETAILED DESCRIPTION OF THE PREFERRED EMBODIMENTS

There will now be described a preferred embodiment of the present invention with reference to the drawings.

Example 1

Between two continuously cast aluminum killed steel sheets having a thickness of 0.4 mm, a polyolefin resin containing an iron powder preliminarily dispersed uniformly therein was laminated. The laminate steel sheet obtained above was cut to make a plurality of test pieces, which were subjected to a property and performance qualification test.

Preparation conditions of the laminate steel sheet were as follows:
  (1) Conductive material: water-atomized pure iron powder
  (2) Particle size of iron powder:
      (a) 37 - 52 $\mu$m
      (b) 44 - 61 $\mu$m
      (c) 53 - 73 $\mu$m
      (d) 62 - 87 $\mu$m
      (e) 88 - 104 $\mu$m
      (f) 105 - 124 $\mu$m

(3) Amount of iron powder added: 3.5 vol % (fixed)

(4) Thickness of laminated resin film: 50 $\mu$m ($\pm$ 3 $\mu$m)

(5) Average particle size (d) of iron powder/Film thickness (t) of resin = 0.89 - 2.30

The vibration damping composite steel sheet prepared was cut to make one thousand test samples each having a size of 30 mm wide x 100 mm long. Using these samples, the spot weldability with a lap size of 30 mm was evaluated. Further, the bonding strength and the loss factor were also examined.

Welding conditions were an electrode force of 200 kgf, a welding current of 8 kA and a welding time of 12 cycles. The evaluation of the spot weldability was carried out by observing the surface condition of each sample after being spot welded, totalizing the number of samples generating welding defects such as hole formation, burning on the surface of the steel sheet and a non-conductive condition, and calculating the ratio of the number of samples generating the welding defects to the total number of samples, thus obtaining the rate of welding defect generation.

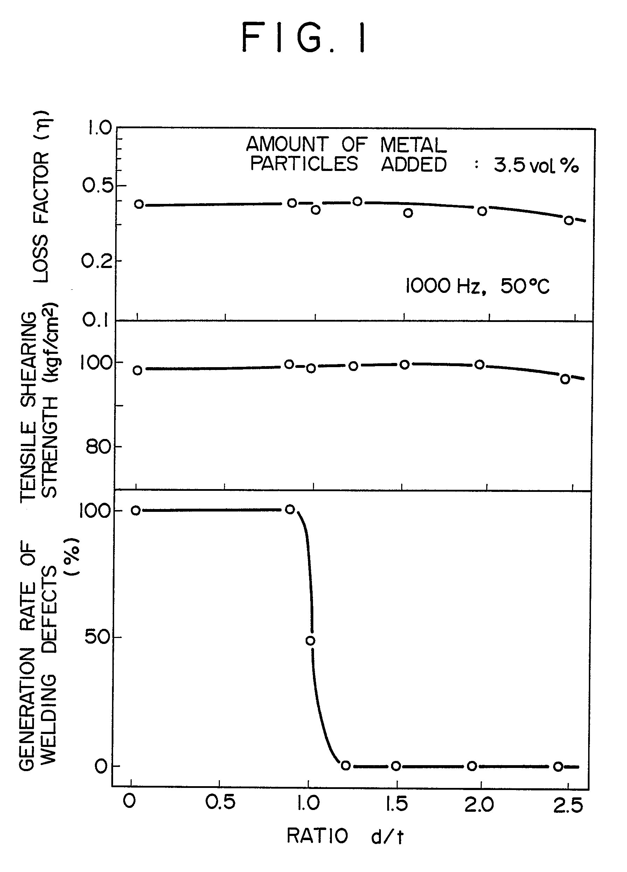

The result of the evaluation is shown in Fig. 1. As apparent from Fig. 1, when d/t $\geqq$ 1.2 is effective, the rate of the welding defect generation is zero, and a reduction in bonding strength and damping performance is not recognized. Further, a cross section of the steel sheet manufactured in accordance with the conditions defined by the present invention was observed by using an optical microscope (x 400). The result of the observation is schematically shown in Fig. 2. As apparent from Fig. 2, the iron powder as a whole is deformed, and bites into the skin steel sheets.

Example 2

Between two continuously cast aluminum killed steel sheets having a thickness of 0.4 mm, a polyolefin resin containing an iron powder preliminarily dispersed uniformly therein was laminated. The laminate steel sheet obtained above was cut to make a plurality of test pieces, which were subjected to a property and performance qualification test.

Preparation conditions of the laminate steel sheet were as follows:

(1) Conductive material: water-atomized pure iron powder

(2) Particle size of iron powder: 88 - 104 $\mu$m

(3) Amount of iron powder added: 1 %, 2 %, 3 %, 4 %, 5 % (vol %)

(4) Thickness of laminated resin film: 50 $\mu$m ($\pm$3 $\mu$m)

The vibration damping composite steel sheet prepared was cut to make one thousand test samples each having a size of 30 mm wide x 100 mm long. Using these samples, the spot weldability with a lap size of 30 mm was evaluated. Further, the bonding strength and the loss factor were also examined. The same welding conditions as those in Example 1 were employed, and the evaluation of the spot weldability was also similarly carried out.

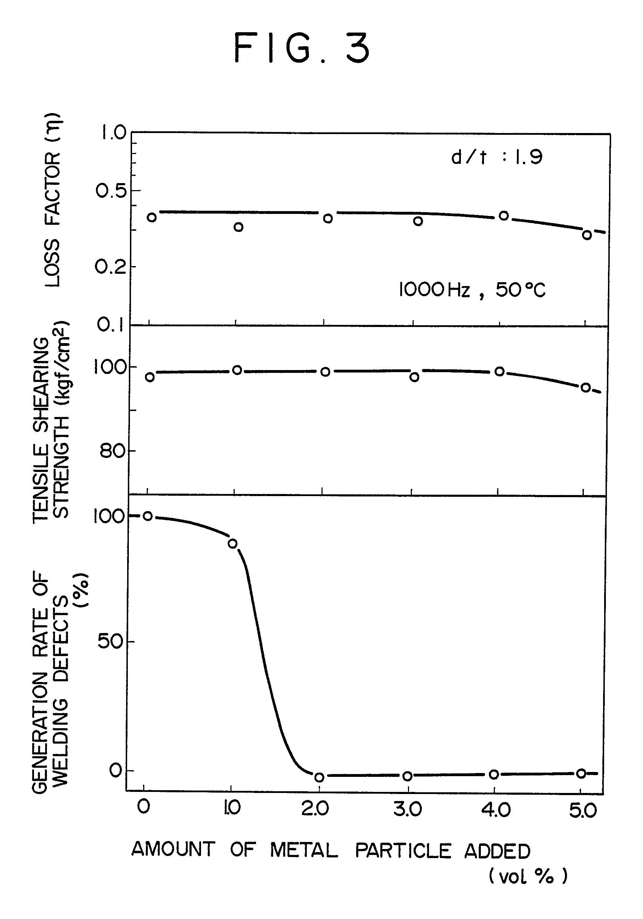

The result of the evaluation is shown in Fig. 3. As apparent from Fig. 3, when the amount of the iron powder added is greater than 2 vol %, the rate of the welding defect generation is zero, and a reduction in bonding strength and damping performance is not recognized.

Example 3

Between a continuously cast aluminum killed steel sheet having a thickness of 0.4 mm and an alloyed molten zinc double plated steel sheet (plating deposition amount: 45 g/m$^2$), a polyolefin resin containing metal particles preliminarily dispersed uniformly therein was laminated. The laminate steel sheet obtained above was cut to make a plurality of test pieces, which were subjected to a property and performance qualification test.

Preparation conditions of the laminate steel sheet were as follows:

(1) Conductive material:

(a) Pure iron powder manufactured by a water atomizing process; Hardness Hv (0.005) = 110

(b) Low alloy steel powder manufactured by a water atomizing process; Hardness Hv (0.005) = 173

(c) Pure Ni powder manufactured by a water atomizing process; Hardness Hv (0.005) = 122

(d) Pure Ni powder manufactured by a gas reducing process; Hardness Hv (0.005) = 252

(e) SUS 304 powder manufactured by a water atomizing process; Hardness Hv (0.005) = 220

(f) SUS 304 powder manufactured by a water atomizing process; Hardness Hv (0.005) = 480

(2) Particle size of metal particles: 63 - 87$\mu$m

7

(3) Amount of metal particles added: 3.5 % vol (fixed)

(4) Thickness of laminated resin film: 50 $\mu$m ( $\pm$ 3 $\mu$m)

(5) Hardness of the surface layer (plating layer) of the skin steel sheet: Hv (0.001) = 265

The vibration damping composite steel sheet prepared was cut to make one thousand test samples each having a size of 30 mm wide x 100 mm long. Using these samples, the spot weldability with a lap size of 30 mm was evaluated. The result of the evaluation is shown in Table 1.

Welding conditions were an electrode force of 200 kgf, a welding current of 8 kA and a welding time of 12 cycles. The evaluation of the spot weldability was carried out by observing the surface condition of each sample after being spot welded, totalizing the number of samples generating welding defects such as hole formation, burning on the surface of the steel sheet and a non-conductive condition, and calculating the ratio of the number of samples generating the welding defects to the total number of samples, thus obtaining the rate of welding defect generation.

As apparent from Table 1, the sample Nos. 2, 4 and 5 according to the present invention satisfying the condition that the ratio of the hardness (Ph) of the metal particles to the surface hardness (Sh) of the thin steel sheet is in the range of $0.6 \leq$ Ph/Sh $\leq 1.1$ have a superior spot weldability and a good surface condition.

Example 4

Between a continuously cast aluminum killed steel sheet having a thickness of 0.4 mm and a Zn-Ni alloy double electroplated steel sheet (plating deposition amount: 20 g/m$^2$), a polyolefin resin containing metal particles preliminarily dispersed uniformly therein was laminated. The laminate steel sheet obtained above was cut to make a plurality of test pieces, which were subjected to a property and performance qualification test.

Preparation conditions of the laminate steel sheet were as follows:

(1) Conductive material:

(a) Pure iron powder manufactured by a water atomizing process; Hardness Hv (0.005) = 110

(b) Low alloy steel powder manufactured by a water atomizing process; Hardness Hv (0.005) = 173

(c) Pure Ni powder manufactured by a water atomizing process; Hardness Hv (0.005) = 122

(d) Pure Ni powder manufactured by a gas reducing process; Hardness Hv (0.005) = 252

(e) SUS 304 powder manufactured by a water atomizing process; Hardness Hv (0.005) = 220

(f) SUS 304 powder manufactured by a water atomizing process; Hardness Hv (0.005) = 480

(2) Particle size of metal particles: 63 - 87 $\mu$m

(3) Amount of metal particles added: 3.5 vol % (fixed)

(4) Thickness of laminated resin film: 50 $\mu$m ($\pm$3 $\mu$m)

(5) Hardness of the surface layer (plating layer) of the skin steel sheet: Hv (0.001) = 323

The vibration damping composite steel sheet prepared was cut to make one thousand test samples each having a size of 30 mm wide x 100 mm long. Using these samples, the spot weldability with a lap size of 30 mm was evaluated. The result of the evaluation is shown in Table 2.

The same welding conditions as those in Example 3 were employed, and the evaluation of the spot weldability was also similarly carried out.

As apparent from Table 2, the sample Nos. 4 and 5 according to the present invention satisfying the condition that the ratio of the hardness (Ph) of the metal particles to the surface hardness (Sh) of the thin steel sheet is in the range of $0.6 \leq$ Ph/Sh $\leq 1.1$ have a superior spot weldability and a good surface condition.

Example 5

Between a continuously cast aluminum killed steel sheet having a thickness of 0.4 mm and an Fe-Zn alloy electroplated steel sheet formed by electroplating an Fe-Zn alloy on the surface of an alloyed molten zinc double plated steel sheet (plating deposition amount: 40 g/m$^2$ for the alloyed molten metal and 5 g/m$^2$ for the electroplating), a polyolefin resin containing metal particles preliminarily dispersed uniformly therein was laminated. The laminate steel sheet obtained above was cut to make a plurality of test pieces, which were subjected to a property and performance qualification test.

Preparation conditions of the laminate steel sheet were as follows:

(1) Conductive material:

    (a) Pure iron powder manufactured by a water atomizing process; Hardness Hv (0.005) = 110

    (b) Low alloy steel powder manufactured by a water atomizing process; Hardness Hv (0.005) = 173

    (c) Pure Ni powder manufactured by a water atomizing process; Hardness Hv (0.005) = 122

    (d) Pure Ni powder manufactured by a gas reducing process; Hardness Hv (0.005) = 252

    (e) SUS 304 powder manufactured by a water atomizing process; Hardness Hv (0.005) = 220

    (f) SUS 304 powder manufactured by a water atomizing process; Hardness Hv (0.005) = 480

(2) Particle size of metal particles: 63 - 87 $\mu$m

(3) Amount of metal particles added: 3.5 vol % (fixed)

(4) Thickness of laminated resin film: 50 $\mu$m (±3 $\mu$m)

(5) Hardness of the surface layer (plating layer) of the skin steel sheet: Hv (0.001) = 343

The vibration damping composite steel sheet prepared was cut to make one thousand test samples each having a size of 30 mm wide x 100 mm long. Using these samples, the spot weldability with a lap size of 30 mm was evaluated. The result of the evaluation is shown in Table 3.

The same welding conditions as those in Example 3 were employed, and the evaluation of the spot weldability was also similarly carried out.

As apparent from Table 3, the sample Nos. 4 and 5 according to the present invention satisfying the condition that the ratio of the hardness (Ph) of the metal particles to the surface hardness (Sh) of the thin steel sheet is in the range of $0.6 \leq Ph/Sh \leq 1.1$ have a superior spot weldability and a good surface condition.

As described above, according to one aspect of the present invention, a stable resistance weldability can be ensured by defining the ratio of the average size of the metal particles/the thickness of the resin film in a wide range. Further, the bonding strength having a large influence upon press formability is not reduced, and the damping performance (loss factor $\eta$ ) which is the most essential feature of the vibration damping composite steel sheet is not reduced. In particular, an inexpensive water-atomized iron powder can be used for a metal filler, and its component is near a pure iron which is equal to a component of a base metal forming a welded joint, thereby greatly reducing an influence on various characteristics of the welded joint.

According to another aspect of the present invention, even in the case of using a plated steel sheet for the skin material, the resistance welding can be stabilized without reducing the damping performance and the bonding strength necessary for press forming.

While the invention has been described with reference to specific embodiments, the description is illustrative and is not to be construed as limiting the scope of the invention. Various modifications and changes may occur to those skilled in the art without departing from the spirit and scope of the invention as defined by the appended claims.

Table 1

| | Characteristics in Using Alloyed Molten Zinc Plated Steel Sheet (Plating Layer Hardness Hv = 265) | | | | | |
|---|---|---|---|---|---|---|
| No. | Kind of Metal Particles | Hardness of Particles | Ph/Sh | Generation Rate of Welding Defects | Surface Condition | Remarks |
| 1. | (1) Pure Iron Powder | Hv = 110 | 0.415 | 60 % | Good | Comparison |
| 2. | (2) Low Alloy Steel Powder | Hv = 173 | 0.652 | 0 % | Good | Present Invention |
| 3. | (3) Pure Ni Powder | Hv = 122 | 0.460 | 27 % | Good | Comparison |
| 4. | (4) Pure Ni Powder | Hv = 252 | 0.950 | 0 % | Good | Present Invention |
| 5. | (5) SUS304 Powder | Hv = 220 | 0.830 | 0 % | Good | Present Invention |
| 6. | (6) SUS304 Powder | Hv = 480 | 1.811 | 0 % | Presence of Fine Unevenness | Comparison |

EP 0 385 684 A1

Table 2

| | Characteristics in Using Zn-Ni Alloy Electroplated Steel Sheet (Plating Layer Hardness Hv = 323) | | | | | |
|---|---|---|---|---|---|---|
| No. | Kind of Metal Particles | Hardness of Particles | Ph/Sh | Generation Rate of Welding Defects | Surface Condition | Remarks |
| 1. | (1) Pure Iron Powder | Hv = 110 | 0.340 | 80 % | Good | Comparison |
| 2. | (2) Low Alloy Steel Powder | Hv = 173 | 0.535 | 5 % | Good | Comparison |
| 3. | (3) Pure Ni Powder | Hv = 122 | 0.377 | 46 % | Good | Comparison |
| 4. | (4) Pure Ni Powder | Hv = 252 | 0.780 | 0 % | Good | Present Invention |
| 5. | (5) SUS304 Powder | Hv = 220 | 0.681 | 0 % | Good | Present Invention |
| 6. | (6) SUS304 Powder | Hv = 480 | 1.486 | 0 % | Presence of Fine Unevenness | Comparison |

Table 3

| | Characteristics in Using Zn-Fe Alloy Electroplated Steel Sheet (Plating Layer Hardness Hv = 343) | | | | | |
|---|---|---|---|---|---|---|
| No. | Kind of Metal Particles | Hardness of Particles | Ph/Sh | Generation Rate of Welding Defects | Surface Condition | Remarks |
| 1. | (1) Pure Iron Powder | Hv = 110 | 0.321 | 77 % | Good | Comparison |
| 2. | (2) Low Alloy Steel Powder | Hv = 173 | 0.504 | 8 % | Good | Comparison |
| 3. | (3) Pure Ni Powder | Hv = 122 | 0.356 | 53 % | Good | Comparison |
| 4. | (4) Pure Ni Powder | Hv = 252 | 0.735 | 0 % | Good | Present Invention |
| 5. | (5) SUS304 Powder | Hv = 220 | 0.641 | 0 % | Good | Present Invention |
| 6. | (6) SUS304 Powder | Hv = 480 | 1.399 | 0 % | Presence of Fine Unevenness | Comparison |

## Claims

1. A resistance weldable type vibration damping composite steel sheet including two thin steel sheets, a visco-elastic high-molecular resin film sandwiched between said thin steel sheets, and metal particles uniformly dispersed in said visco-elastic high-molecular resin film, said resistance weldable type vibration damping composite steel sheet being formed by laminating said visco-elastic high-molecular resin film containing said metal particles between said thin steel sheets **characterised in that** a ratio of an average size (d) of said metal particles before laminating to a thickness (t) of said resin film after laminating is in the range of $1.2 \leq d/t \leq 2.5$, and a flattening ratio of said metal particles after laminating (i.e., a ratio of the size of said metal particles in a direction of the thickness of said resin film after laminating to that before laminating) is 6 % or more, and a ratio of an anchoring amount ($\delta$) of said metal particles anchoring into said thin steel sheet to the thickness (t) of said resin film is in the range of $1 \% \leq \delta /t$.

2. A resistance weldable type vibration damping composite steel sheet including two thin steel sheets, a visco-elastic high-molecular resin film sandwiched between said thin steel sheets, and metal particles uniformly dispersed in said visco-elastic high-molecular resin film, said resistance weldable type vibration damping composite steel sheet being formed by laminating said visco-elastic high-molecular resin film containing said metal particles between said thin steel sheets characterised in that a ratio of a hardness (Ph) of said metal particles to a surface hardness (Sh) of said thin steel sheets is in the range of $0.6 \leq Ph/Sh \leq 1.1$.

3. A vibration damping composite steel sheet as defined in claim 1 or 2, wherein a flattening ratio of said metal particles after laminating is 20 % or more.

4. A vibration damping composite steel sheet as defined in claim 1, 2 or 3, wherein the ratio of the anchoring amount ($\delta$) of said metal particles anchoring into said thin steel sheet to the thickness (t) of said resin film is in the range of $1 \% \leq \delta /t \leq 10 \%$.

5. A vibration damping composite steel sheet as defined in claim 1 or 2, wherein an amount of said metal particles to be added to said resin film is 2 - 5 vol %.

6. A vibration damping composite steel sheet as defined in claim 1 or 2, wherein said metal particles are one selected from an iron powder, steel powder or Ni powder.

7. A vibration damping composite steel sheet as defined in claim 1 or 2, wherein said visco-elastic high-molecular resin film is one selected from a polyolefin resin, polyester resin or vinyl acetate resin.

8. A vibration damping composite steel sheet as defined in claim 1 or 2, wherein the thickness of said visco-elastic high-molecular resin film is 10 - 150 $\mu$m.

9. A vibration damping composite steel sheet as defined in claim 1 or 2, wherein said thin steel sheet is one selected from a cold-rolled steel sheet or plated steel sheet.

# FIG. 1

# FIG. 2

BITING PORTION OF METAL PARTICLES
TO SKIN STEEL SHEET (ANCHOR EFFECT)

DIRECTION OF
SHEARING LOAD ⟹

SKIN STEEL
SHEET

DAMPING
RESIN

DAMPING
RESIN

SKIN STEEL
SHEET

⟸ DIRECTION OF
SHEARING LOAD

# FIG. 3

## DOCUMENTS CONSIDERED TO BE RELEVANT

EP 90301998.2

| Category | Citation of document with indication, where appropriate, of relevant passages | Relevant to claim | CLASSIFICATION OF THE APPLICATION (Int Cl⁵) |
|---|---|---|---|
| X | <u>EP - A2/A3 - 0 219 104</u> (NIPPON) * Abstract; page 3, lines 23-25; page 5, lines 30-35; page 6, lines 29,33-35; page 7, lines 12-18 * -- | 1-9 | B 32 B 15/08 B 32 B 15/18 |
| X | <u>US - A - 4 789 586</u> (MORIMURA) * Column 5, lines 18-29 * -- | 1-9 | |
| X | PATENT ABSTRACTS OF JAPAN, unexamined applications, C section, vol. 3, no. 7, January 24, 1979 THE PATENT OFFICE JAPANESE GOVERNMENT page 24 C 34 * Kokai-no. 53-128 687 (KOBE SEIKOSHO) * -- | 1-9 | |
| X | CHEMICAL ABSTRACTS, vol. 96, no. 26, June 28, 1982, Columbus, Ohio, USA TOYO KOGYO CO. "Vibrations dampers for automobiles" page 75, column 1, abstract-no. 219 123h & Jpn. Kokai Tokkyo Koho JP 82, 24251 ---- | 1-5,8, 9 | TECHNICAL FIELDS SEARCHED (Int Cl⁵) B 32 B 15/00 |

The present search report has been drawn up for all claims

| Place of search | Date of completion of the search | Examiner |
|---|---|---|
| VIENNA | 30-05-1990 | ONDER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82